# EUROPEAN PATENT APPLICATION

(11) **EP 4 450 190 A1**
(43) Date of publication of application: **23.10.2024**
(21) Application number: 23168179.2
(22) Date of filing: 17.04.2023
(51) Int. Cl.: B22F 10/25, B33Y 30/00, B22F 12/53, B33Y 10/00, B22F 12/41, B22F 12/43, B22F 12/45

(54) **A DEVICE AND METHOD FOR LASER 3D OBJECT PRINTING**

(71) Applicant: Valstybinis Moksliniu Tyrimu Institutas Fiziniu Ir Technologijos Mokslu Centras, 02300 Vilnius (LT)
(72) Inventor: MORDAS, Genrik, 02300 Vilnius (LT); STEPONAVICIUTE, Ada, 02300 Vilnius (LT); STRAVINSKAS, Karolis, 02300 Vilnius (LT); PETKEVIC, Romuald, 02300 Vilnius (LT); SHAHIDI, Alireza, 02300 Vilnius (LT)
(74) Representative: Draugeliene, Virgina Adolfina

(57) **Abstract**

This invention relates to laser-assisted material deposition (LAMD) system for laser additive manufacturing. A device comprises a printing head (1) having a de Laval geometry nozzle and an optical system (2). The invention aims to achieve a higher printing resolution and to expand the variety of printing materials, especially ceramic materials. Printing head (1) comprises a de Laval geometry nozzle (13), a convergence zone described by a Bicubic curve, and a divergence zone described by a quadratic Bezier curve. A gas flow is transferred to the de Laval nozzle convergence zone through the first laminarizer (12) and is bound with ceramic particles in the beginning of the divergence zone (15) of the de Laval nozzle (13). A shielding gas is supplied through the second laminarizer (8) and forms an annular shielding gas flow at the exit end of the printing head (1) surrounding the particles and gas flow exiting the de Laval nozzle outlet (10). Optical system (2) is configured to couple two laser beams consisting of coherent pulsed and continuous laser beams.

## Description

### Technical field of the invention

This invention relates to laser-assisted material deposition (LAMD) system for additive manufacturing particularly to laser 3D printing by laser forming of parts of complex geometry, work pieces or products using solid material powders, in particular ceramic powders.

### Background of the invention

3D printing, also known as additive manufacturing, is a group of technologies used for three-dimensional object production directly from CAD models by depositing feedstock materials in a layer-by-layer fashion. Compared with traditional manufacturing technologies, additive manufacturing can directly manufacture parts of complex geometry and has a faster manufacturing speed for prototype or unique part production.

Currently, polymers and metals remain the main materials used in additive manufacturing technologies, however, a demand for ceramic three-dimensional part production has been increasing, thus leading to more research in the field of ceramic additive manufacturing. Implementing ceramic materials would result in high complexity three-dimensional parts possessing such characteristics as high hardness, temperature and wear resistance, low thermal conductivity etc.

There are technologies developed enabling ceramic light-cured part production from slurry (e.g., CN11185253A, CN15408994A). After the object formation, post-processing by additional curing is required, which causes part shrinkage, prolongs total production time, and requires additional equipment.

In ceramic 3D printing materials are mostly used in paste or slurry form whereas in metal additive manufacturing the feedstock materials are either in powder or wire form. Using materials in powder or wire form as it is done in Selective Laser Sintering (SLS) and Laser Material Deposition (LMD) technologies gives additive manufacturing more flexibility (US1798142B2, EP3357606A1) which cannot be achieved by printing from slurry or paste. For this reason, it is highly important to find a way to produce three-dimensional parts from ceramic materials in powder form. Studies show that SLS technology has advantages over LMD (printing accuracy) for metal and plastic powders. However, the small particle size of ceramic powder determines the formation of uneven layers in SLS technology. Thus, for dry-form ceramic printing, extrusion-based technology could be more suitable. Coaxial flow heads (e.g., US7259353B2, US20050056628A1, US5486676A) are usually used for spraying dry material. In them, the laser radiation passes through the central axis of the head, and the material particles are supplied from the sides. Material extrusion technology could be applied to dry ceramic printing, but typically applied systems usually use continuous lasers with a wavelength of 930-130 nm. Such Lasers cannot ensure sintering or melting of ceramic materials due to the absorption coefficient values of such materials being outside the absorption window of infrared wavelength.

To improve sintering of ceramic materials with a high refractive index, there are inventions present in which two or more laser sources are combined. One such example is patent CN212991563U, which discloses a multi-wavelength optical path coupling system for ceramic paste 3D printing equipment. Optical systems with combined laser sources are not yet applied in dry ceramic sintering systems.

The closest prior art by technical purpose and implementation is described in Lithuanian patent No.6827. The known laser metal deposition head includes a housing containing a means for supplying and directing metal particles to the head outlet, a means for supplying and directing gas to the head outlet, a tube disposed along the central axis of the head for transmitting laser radiation to melt metal particles entering the surface to be coated. Said tube is a de Laval tube which supplies gas and is directed to the outlet of the head. In the narrowing of the de Laval tube, metal particle suction openings are made in the de Laval tube from the inner cavity of the head housing, which are centered along the longitudinal axis of the de Laval tube and directed to the head outlet. The inner wall of the head housing is in the form of a parabola, and the narrowest points of the de Laval tube and the head housing are arranged concentrically opposite each other. A piezo actuator is provided in the De Laval tube expansion zone to generate ultrasonic vibrations.

Lithuanian patent No.6827 also describes method for laser printing of 3D objects, which comprises supplying and directing under pressure a flow of metal particles of a material from which the 3D object will be produced through the exit hole of a de Laval geometry nozzle of the printing head on a building platform, wherein the metal particles are supplied through the openings which are made in the narrowing part of the de Laval tube, supplying gas under pressure into the printing head, associating them with the flow of solid particles in the de Laval geometry nozzle and directing gas together with the flow of solid particles to the printing head outlet, irradiating the sprayed metal particles on the building platform with a laser beam in order to melt the metal particles, wherein the laser beam is transmitted along the longitudinal axis the de Laval geometry nozzle together with gas.

The known metal deposition head and method for deposition have the following disadvantages.

High print resolution cannot be obtained with the known device and method, because the head configuration and the particle delivery mechanism cannot achieve precise positioning of the particle beam.

The analogue only has one gas flow without a laminarizer, so even gas flow cannot be guaranteed.

The known head is not suitable for working with materials with a high melting point.

### Technical problem to be solved by the present invention

The present invention aims to increase the stability of the gas and material particle flow and the material particle flow resolution, which results in higher printing resolution.

Furthermore, to expand the variety of solid particles of printing materials in 3D printing, especially those that possess a high melting point, such as ceramic materials.

### Disclosure of the essence of the invention

The essence of the proposed invention is that in a device for laser 3D object printing, comprising a printing head having a de Laval geometry nozzle and an optical system emitting at least one laser beam for melting solid particles supplied to a building platform, wherein the printing head comprises: a means for supplying and directing the flow of solid particles of a material from which the 3D object will be produced through an outlet of the de Laval geometry nozzle, a means for supplying a gas and binding it with the solid particles in the de Laval geometry nozzle and directing the gas together with the solid particles to the outlet of the printing head onto the building platform, wherein configuration of a convergence zone of the de Laval geometry nozzle is described by a Bicubic curve, and configuration of a divergence zone of the de Laval geometry nozzle is described by a quadratic Bezier curve,

a pneumatic connection is installed in parallel with an axis of the de Laval geometry nozzle, connected to the capillary, where a free outlet end of the capillary passes through the narrowest part of the de Laval geometry nozzle and ends at a beginning of the divergence zone of the de Laval geometry nozzle, and an inlet end of the capillary is associated with the pneumatic connection for supplying solid particles of the material through the capillary to the beginning of the divergence zone of the de Laval geometry nozzle, where its expansion begins,

at least two pneumatic connections are provided for supplying gas through a first laminarizer installed in the printing head connected to channels for laminar gas flow transfer to the de Laval nozzle convergence zone,

at least two additional pneumatic connections are provided for supplying a shielding gas through the second laminarizer installed in the head, configured to form laminar gas flow, creating an annular shielding gas flow at the exit end of the printing head surrounding the particle and gas flow exiting the de Laval nozzle outlet.

Solid particles of the material are dry ceramic particles.

The optical system is configured to couple two laser beams consisting of coherent pulsed and continuous laser beams.

An optical axis of the optical system is perpendicular to a plane of the building platform, and a longitudinal axis of the printing head forms an angle of 45-80 degrees with the building platform plane.

A heating element is provided for heating the first laminarizer.

A heating element is provided for heating the second laminarizer.

Said gas can be selected from inert gases such as nitrogen or argon or can be compressed air.

Method for laser printing of 3D object, comprising
- supplying and directing under pressure a flow of solid particles of a material from which the 3D object will be produced through the exit hole of a de Laval geometry nozzle of the printing head on a building platform,
- supplying gas under pressure into the printing head, associating them with the flow of solid particles in the de Laval geometry nozzle and directing gas together with the flow of solid particles to the printing head outlet,
- irradiating the solid particles of the sprayed material on the building platform with a light beam consisting of at least one laser beam, in order to melt the solid particles,
wherein a convergence zone of the de Laval nozzle is described by a Bicubic curve, and a divergence zone of the de Laval nozzle is described by a quadratic Bezier curve, wherein the method comprises:
- supplying the solid particles of the material through the capillary installed in the de Laval nozzle along its longitudinal axis to the beginning of the expansion of the divergence zone of the de Laval nozzle,
- supplying the gas through the first laminarizer and directing it through the channels installed in the printing head to the convergence zone of the de Laval nozzle,
- acceleration of the gas in a narrowest part of the de Laval nozzle,
- associating the accelerated gas with the solid particles at the beginning of the divergence zone of the de Laval nozzle, wherein a pressure drop is formed, sucks in solid particles, and together with the accelerated gas flow, carries the solid particles to the outlet of the de Laval nozzle,
- supplying a shielding gas through a second laminarizer and creating an annular shielding gas flow at the printing head outlet that surrounds the particle beam exiting the de de Laval nozzle outlet.

The solid particles of the material are dry ceramic particles.

The light beam for melting the solid particles includes two laser beams combined, consisting of coherent pulsed and continuous laser beams.

The direction of spraying the solid particles on the building platform forms an angle of 45-80 degrees with a plane of the building platform, and the direction of laser beam is perpendicular to the plane of the building platform.

### Advantages of the invention

The advantage of the proposed invention compared to the closest analogue in terms of technical purpose and design is that a convergence and divergence zones are described by different mathematical curves, which are chosen according to the different gas pressures in those zones of de Laval nozzle. The Bicubic curve ensures gas compression and increase of velocity, while the Bezier curve ensures the uniformity of the gas flow.

Since there is a large pressure drop in the divergence zone, the particles are drawn in, thus accelerating them. Then the solid particles travel to the outlet of the de Laval tube wherein at the end of the head additionally creates an annular flow of shielding gas, surrounding the flow of particles exiting the opening. Such configuration of the printing head results in a more stable gas and particle flow and an improved printing resolution due to a more focused particle beam at the outlet.

The gas in the printing head can be additionally heated with a heating element in the laminarizer, thus enabling usage of materials with a high melting point. The optical system is configured to combine two laser radiations consisting of coherent pulsed and continuous laser radiations. Both these components enable the laser deposition system to be used with dry ceramic particles.

### Brief description of drawings

Fig. 1 shows a scheme of laser-assisted material deposition (LAMD) system.
Fig. 2 shows a pneumatic system of printing head.
Fig. 3 shows a detailed view of printing head.
Fig.4 shows a cross-sectional view of printing head.
Fig. 5 shows gas flow distribution channels.

### One of the examples implementing the invention

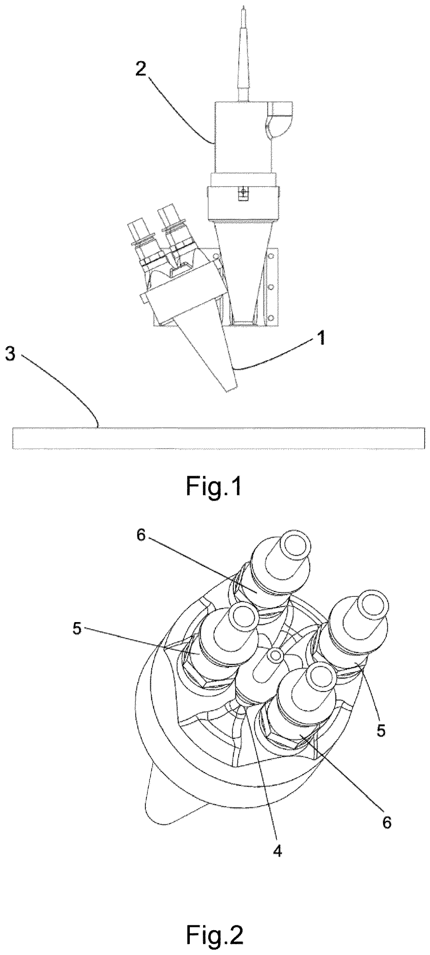

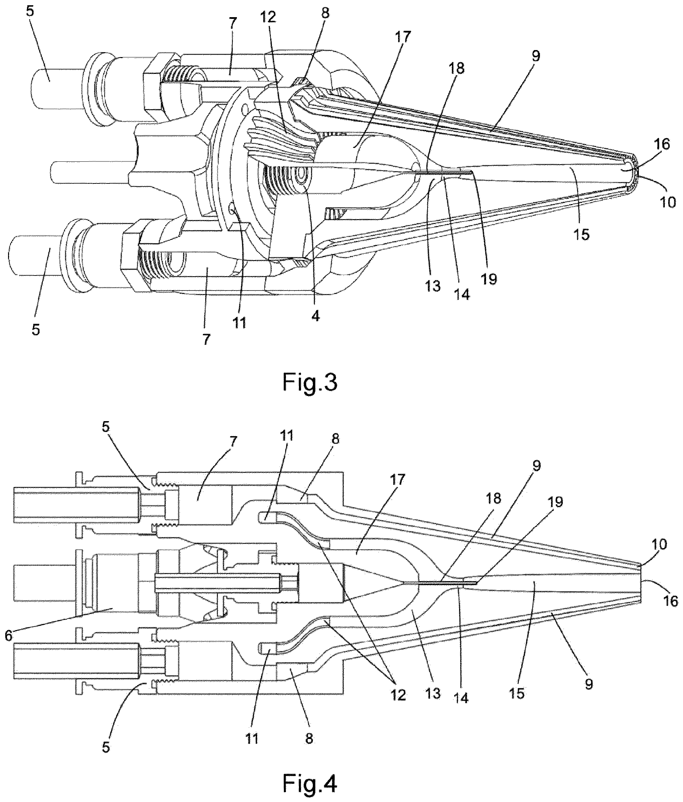

Fig. 1 shows the LAMD system which consists of a printing head 1, an optical system 2 and building platform 3. The printing head 1, illustrated in Fig. 2, comprises a body which has one pneumatic connection 4 for particle flow, two pneumatic connections 5 for shielding gas, two pneumatic connections 6 for gas flow. A detailed view of the printing head 1 is shown in Fig. 3. The printing head 1 comprises shielding gas channels 7 connected with shielding gas laminarizer 8 wherein shielding gas laminar channels 9 ends at an outlet 10 of the printing head 1 by forming a ring-shaped flow of shielding gas. Four channels 11 for gas flow connected with input of a gas flow laminarizer 12. The printing head 1 includes a de Laval geometry nozzle 13, having a convergence zone i.e. narrowing part of the de Laval geometry nozzle 13, which is described by a Bicubic curve, a narrowest part (throat) 14 and a divergence zone (widening part) 15 which is described by a quadratic Bezier curve. The de Laval geometry nozzle 13 has particle gas flow outlet hole 16 which coincides with the outlet of the head 1. Capillary holder 17 is provided for holding a capillary 18, which is arranged along the longitudinal axis of the de Laval geometry nozzle 13. An outlet 19 of the capillary 18 ends in the beginning of the divergence zone 15 of the de Laval geometry nozzle 13. Heating elements (not shown in the drawings) are provided for heating the laminarizers 8 and 12.

Printing head 1 is used for particle flow formation. Optical system 2 is configured to generate a stream of focused, coherent pulsed (ns or ps) and continuous light. Particle flow and coherent light stream is focused on the building platform 3. The optical system 2 is placed perpendicularly to the plane of the building platform 3 while the printing head 1 is positioned at a 45-80 deg angle with plane of the building platform 3. The distance between the printing head 1 and building platform 3 is 10-20 mm. The building platform 3 can be either fixed or move in XY direction depending on system configuration.

It can be seen from Fig. 3 and Fig.4 that solid particles together with gas enter through a pneumatic connection 4 of the printing head 1. The pneumatic connection 4 is associated with the capillary 18. A stainless-steel capillary 18 with a length of 13-30 mm and a diameter of 0.2-0.5 mm without an internal seam is installed at the end of the capillary holder 17. Gas with particles exits the capillary outlet 19 and enters the center of the clean compressed gas stream.

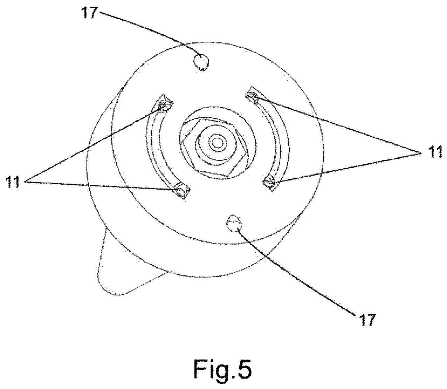

Clean gas is supplied to the printing head 1 through two pneumatic connections 5. After passing through two pneumatic connections 5, the gas is divided into four channels 11 (Fig. 5). The gas can be selected from inert gases such as nitrogen or argon or can be compressed air.

The gas flow from the earlier mentioned four channels 11 enters the gas laminarizer 12 (Fig. 3). The laminarizer 12 forms a laminar gas flow around the capillary holder 17. The capillary holder 17 is inserted into the narrowing part of the de LaVale geometry nozzle 13, and the capillary 18 itself passes through the throat 14 of the nozzle 13 and ends at the widening part 15 of the de LaVale nozzle 13, wherein a negative pressure zone is formed. The negative pressure zone allows particles to be sucked in from the capillary 18 and accelerates them. Accelerated particles exiting the nozzle 13 enter an additional gas (compressed air, nitrogen, or argon) shield, which protects the particles from the effects of the atmosphere at a distance from the head exit hole 16 to the surface of the building platform 3. Additional shielding gas is introduced into the nozzle through two pneumatic connections 6 and enters the shielding gas laminarizer 8 through two channels 9. The laminar channels 9 terminate at the very end of the head 10. An additional protective gas shield protects particles from atmospheric effects at a distance from the head outlet 16 to the surface of the substrate 3.

The printing head according to the proposed invention has a unique internal de Laval nozzle geometry which ensures the formation of a focused particle beam. The geometry of the internal de Laval nozzle is described by two curves: Bicubic for the convergence zone 13 and Quadratic Bezier for the divergence zone 15. The diameter of said focused particle beam can be from 100 to 500 um. The design of the nozzle is based on the de LaVale gas flow acceleration and particle flow entrance in the zone of lowest gas pressure and highest gas velocity. Such design allows the suction of particle flow into the de LaVale tube and ensures particle acceleration to up to 500-700 m/s. This velocity window ensures particle bonding with the substrate on the building platform. Velocity that is lower than 500 m/s results in particles bouncing from the substrate. Velocity values higher than 700 m/s create substrate erosion.

For the laser to effectively melt ceramic (SiO₂, ZrO₂, Al₂O₃) particles, the laser beam consists of pulsed and continuous coherent light.

## Claims

1. A device for laser 3D object printing, comprising a printing head (1) having a de Laval geometry nozzle and an optical system (2) emitting at least one laser beam for melting solid particles supplied to a building platform (3), wherein
the printing head (1) comprises:
- a means for supplying and directing a flow of solid particles of a material from which the 3D object will be produced, through an outlet of the de Laval geometry nozzle,
- a means for supplying a gas and binding it with the solid particles in the de Laval geometry nozzle and directing the gas together with the solid particles to the outlet of the printing head (1) onto the building platform (3),
**characterized in that**
configuration of a convergence zone of the de Laval geometry nozzle (13) is described by a Bicubic curve, and configuration of a divergence zone (15) of the de Laval geometry nozzle (13) is described by a quadratic Bezier curve,
a pneumatic connection (4) is installed in parallel with an axis of the de Laval geometry nozzle, connected to the capillary (18), where the free outlet end (19) of the capillary (18) passes through a narrowest part (14) of the de Laval geometry nozzle (13) and ends at a beginning of the divergence zone (15) of the de Laval geometry nozzle (13) and an inlet end of the capillary (18) is associated with the pneumatic connection (4) for supplying solid particles of the material through the capillary (18) to the beginning of the divergence zone (15) of the de Laval geometry nozzle (13), where its expansion begins,
at least two pneumatic connections (5) are provided for supplying the gas through a first laminarizer (12) and channels installed in the printing head (1) for transferring laminar gas flow to the de Laval nozzle (13) convergence zone,
at least two additional pneumatic connections (6) are provided for supplying a shielding gas through the second laminarizer (8) installed in the head, configured to form laminar gas flow, creating an annular shielding gas flow at the exit end of the printing head (1) surrounding the particle and gas flow exiting the de Laval nozzle outlet (10).

2. Device according to claim 1, wherein the solid particles of the material are dry ceramic particles.

3. Device according to any one of claims 1-2, wherein the optical system (2) is configured to couple two laser beams consisting of coherent pulsed and continuous laser beams.

4. Device according to any one of the preceding claims, wherein an optical axis of the optical system (2) is perpendicular to a plane of the building platform, and a longitudinal axis of the printing head forms an angle of 45-80 degrees with the building platform plane.

5. Device according to any one of the preceding claims, wherein a heating element is provided for heating the first laminarizer (8).

6. Device according to any one of the preceding claims, wherein a heating element is provided for heating the second laminarizer (12).

7. Device according to any one of the preceding claims, wherein said gas can be selected from inert gases such as nitrogen or argon, or can be compressed air.

8. Method for laser printing of 3D object, comprising
- supplying and directing under pressure a flow of solid particles of a material, from which the 3D object will be produced, through the exit hole of a de Laval geometry nozzle (13) of the printing head (1) on a building platform (3),
- supplying gas under pressure into the printing head, associating them with the flow of solid particles in the de Laval geometry nozzle and directing gas together with the flow of solid particles to the printing head (1) outlet,
- irradiating the solid particles of the sprayed material on the building platform (3) with a light beam consisting of at least one laser beam, in order to melt the solid particles,
**characterized in that**
a convergence zone of the de Laval nozzle is described by a Bicubic curve, and a divergence zone of the de Laval nozzle is described by a quadratic Bezier curve, wherein the method comprises:
- supplying the solid particles of the material through a capillary (18), installed in the de Laval nozzle (13) along its longitudinal axis, to a beginning of the expansion of the divergence zone (15) of the de Laval nozzle (13),
- supplying the gas through the first laminarizer (12) and directing it through the channels installed in the printing head (1) to the convergence zone of the de Laval nozzle (13),
- acceleration of the gas in a narrowest part (14) of the de Laval nozzle (13),
- associating the accelerated gas with the solid particles at the beginning of the divergence zone (15) of the de Laval nozzle (13), wherein a pressure drop is formed, sucks in solid particles, and together with the accelerated gas flow, carries the solid particles to the outlet of the de Laval nozzle,
- supplying a shielding gas through a second laminarizer (8) and creating an annular shielding gas flow at the printing head outlet that surrounds the particle beam exiting the de Laval nozzle (13) outlet (16).

9. Method according to claim 8, wherein the solid particles of the material are dry ceramic particles.

10. Method of any one of claims 8-9, wherein the light beam for melting the solid particles includes two laser beams combined, consisting of coherent pulsed and continuous laser beams.

11. Method according to any one of claims 8-10, wherein a direction of spraying the solid particles on the building platform forms an angle of 45-80 degrees with a plane of the building platform, and a direction of laser beam is perpendicular to the plane of the building platform.
